(19) Europäisches Patentamt
European Patent Office
Office européen des brevets

(11) **EP 4 366 128 A1**

(12) **EUROPEAN PATENT APPLICATION**

(43) Date of publication:
**08.05.2024 Bulletin 2024/19**

(21) Application number: **22205107.0**

(22) Date of filing: **02.11.2022**

(51) International Patent Classification (IPC):
*H02J 50/12* *(2016.01)*

(52) Cooperative Patent Classification (CPC):
**H02J 50/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Infineon Technologies AG
85579 Neubiberg (DE)**

(72) Inventors:
• LI, Jiming
  **MInhang, 201114 (CN)**
• WU, Shuang
  **Shanghai, 2000240 (CN)**

(74) Representative: **Westphal, Mussgnug & Partner,
Patentanwälte mbB
Werinherstraße 79
81541 München (DE)**

(54) **WIRELESS POWER TRANSFER SYSTEM AND METHOD FOR OPERATING THEREOF**

(57)     A method and an electronic system are disclosed. The method includes adjusting an input impedance (Rdc) of a switched-mode power converter (5) connected between a power supply system (1) and a load (Z) dependent on an input impedance (Rz) of the load (Z). Adjusting the input impedance (Rdc) of the switched-mode power converter (2) comprises adjusting a duty cycle (D) of the switched-mode power converter (5).

FIG 1

EP 4 366 128 A1

**Description**

This disclosure relates in general to a wireless power transfer system and a method for operating a wireless power transfer system.

Wireless power transfer systems, such as wireless charging systems, offer a convenient and safe way to transfer energy from a power source to a load. In a wireless power transfer system, energy is transferred via an airgap of a transformer, so that no wire-bound connection between the power source and the load is required.

A wireless power transfer system may include an inverter, a transmitter (coupling network) including the transformer, and a rectifier. The inverter is configured to generate AC power based on DC power received from a DC power source, the transmitter is configured to transmit the AC power provided by the inverter via the airgap of the transformer to the rectifier, and the rectifier is configured to provide DC power based on the AC power received from the transmitter. A load may be connected to the rectifier and receive the DC power. In a wireless charging system, the load may be a battery that is charged by the DC power received from the rectifier.

During operation of the wireless power transfer system, at least one of the input current and the input voltage received by the load may change. Some types of inverters, such as Class E single-ended inverters operating in the megahertz range, are very sensitive regarding load changes. This may include that the efficiency of the inverter is dependent on the load scenario and may be lower under some load scenarios than under other load scenarios.

There is a need to operate a wireless power transfer system, such as a wireless charging system, in an efficient way over a wide range of load scenarios.

One example relates to a method. The method includes adjusting an input impedance of a switched-mode power converter connected between a power supply system and a load dependent on an input impedance of the load. Adjusting the input impedance of the switched-mode power converter includes adjusting a duty cycle of the switched-mode power converter.

Another example relates to an electronic system. The electronic system includes a controller configured to determine an input impedance of a load connected downstream a switched-mode power converter, and to adjust an input impedance of the switched-mode power converter dependent on the determined input impedance of the load. To adjust the input impedance of the switched-mode power converter, the controller is configured to adjust a duty cycle of a switched-mode operation of the power converter.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of an electronic system that includes a power supply system, a load, and a power converter coupled between the power supply system and the load;

Figure 2 illustrates one example of a method for operating the electronic system according to Figure 1;

Figure 3 illustrates one example of the power converter that includes a converter circuit and a controller configured to control operation of the converter circuit;

Figure 4 illustrates one example of the converter circuit;

Figures 5A and 5B show timing diagrams that illustrate operating the converter circuit in a continuous conduction mode (CCM) and a discontinuous conduction mode (DCM);

Figure 6 illustrates an input impedance of the converter circuit dependent on a duty cycle of a switched-mode operation of an electronic switch included in the converter circuit and dependent on a load impedance;

Figure 7 illustrates the duty cycle dependent on the load impedance at a desired input impedance of the converter circuit;

Figure 8 illustrates a further example of the converter circuit;

Figure 9 illustrates an example of the power supply system that includes a power source, and inverter, a coupling network, and a rectifier; and

Figure 10 illustrates examples of the inverter, the coupling network, and the rectifier.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

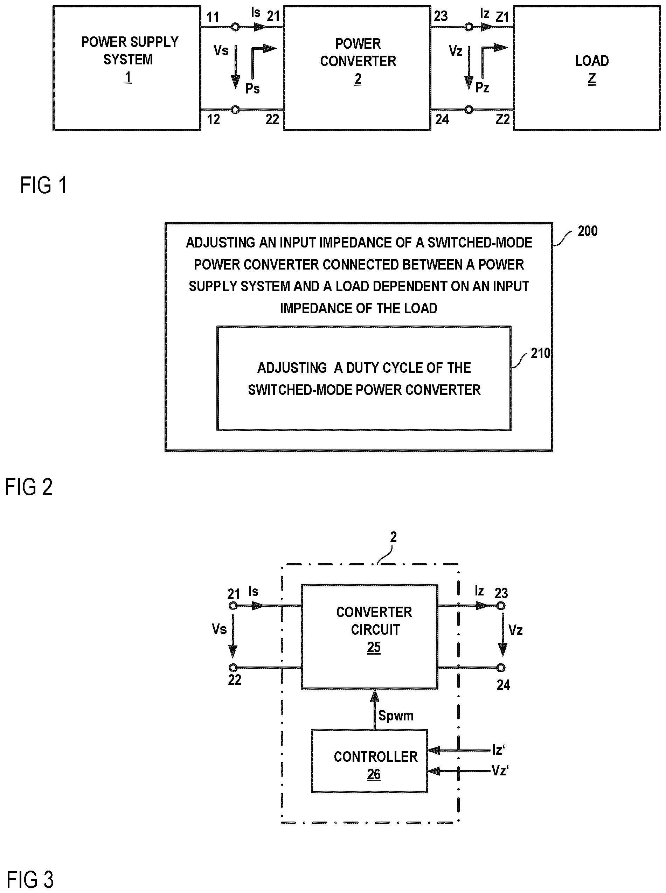

Figure 1 illustrates one example of an electronic system that includes a power supply system 1, a switched-mode power converter 2, and a load Z. The switched-mode power converter 2 is connected between the power supply system 1 and the load Z. More specifically, the switched-mode power converter 2 includes an input 21, 22 connected to an output 11, 12 of the power supply system 1, and an output 23, 24 connected to an input Z1, Z2 of the load Z. In the electronic system according to Figure 1 an impedance at the output 11, 12 of the power supply system 1 is adjusted by the switched-mode power converter 2 in order to achieve a high efficiency of the power supply system 1.

An electronic system of the type according to Figure 1 may be used to supply power to various kinds of mobile units. Examples of such mobile units include, but are not restricted to, handheld electronic devices, such as smartphones or notebooks, or electric vehicles, such as automobiles, trucks, forklifts, or the like. The load Z is a battery of the mobile unit, for example. The battery is a Li-ion battery, for example. The power converter 2 may be part of the mobile unit, that is, the power converter 2 may be integrated in the mobile unit.

According to one example, the power supply system 1 is a wireless power supply system. An example of a wireless power supply system is explained in detail herein further below.

According to one example illustrated in Figure 2, adjusting the impedance at the output 11, 12 of the power supply system 1 includes adjusting an input impedance of the switched-mode power converter 2 dependent on an input impedance Rz of the load Z (200). Furthermore, adjusting the input impedance of the switched-mode power converter 2 includes adjusting a duty cycle of a switched-mode operation of the switched-mode power converter 2 (210). This is explained in detail herein further below.

According to one example, the input impedance Rz of the load Z is given by a voltage level of a load voltage Vz between input nodes Z1, Z2 divided by a current level of a load current Iz received by the load Z at the input terminals Z1, Z2,

$$Rz = \frac{Vz}{Iz} \tag{1}.$$

Referring to the above, the load Z may be a battery, such as Li-ion battery, that can be charged by the power supply system 1 via the switched-mode power converter 2. In this example, the load voltage Vz is defined by the battery Z and changes as the charging state of the battery Z changes. The load voltage Vz is low, for example, when the charging state of the battery is low; and the load voltage Vz increases as the charging state of the battery increases. If, for example, the load current Iz is essentially constant during a certain phase of charging the battery, the input impedance Rz increases as the charging state and, therefore, the load voltage Vz increases. That is, at a constant load current Iz, the input impedance Rz increases as the voltage Vz at the load input Z1, Z2 increases.

According to one example, the power supply system 1 is sensitive regarding load changes. According to one example, "load changes" include changes of an input impedance of a load circuit connected to the output 11, 12 of the power supply system 1. According to one example, "sensitive" includes that the efficiency of the power supply system 1 is dependent on the input impedance of the load circuit, wherein the efficiency may be high for certain values of the input impedance and may be significantly lower for other values of the input impedance. For this reason, directly connecting the load Z to the output 11, 12 of the power supply system 1 may have the effect that the power supply system 1 operates with a low efficiency under certain operating states (at certain charging states) of the load Z.

In the electronic system according to Figure 1, the load circuit connected to the output 11, 12 of the power supply system 1 and supplied by the power supply system 1 includes the load Z and the switched-mode power converter 2 connected between the output 11, 12 and the load Z. The input impedance of the load circuit equals the input impedance of the switched mode power converter 2. The input impedance of the switched-mode power converter 2 can be adjusted by adjusting the duty cycle during a switched-mode operation of the switched-mode power converter 2. More specifically, the input impedance of the switched-mode power converter 2 can be kept essentially constant over an input impedance range of the load Z and can be selected such that the power supply system 1 operates at a high efficiency. In this way, the power supply system 1 can operate at a high efficiency over a wide input impedance range of the load Z.

Referring to Figure 1, the power supply system 1 is configured to provide an output power Ps. The output power Ps is given by the supply voltage Vs provided by the power supply system multiplied with the supply current Is, Ps=Vs·Is. According to one example, the power supply system 1 is configured to control the output power Ps dependent on at least one of the load current Iz or the load voltage Vz. According to one example, the power supply system 1 is configured to regulate one of the load current Iz and the load voltage Vz and is configured to control the output power Ps such that either the current level of the load current Iz equals a predefined current setpoint, or the voltage level of the load voltage Vz equals a predefined voltage setpoint. For this, the power supply system 1 may be configured to (a) receive at least one of the measured load voltage Vz' and the measured load current Iz', (b) calculate a corresponding error signal, and (c) adjust the output power Ps dependent on the error signal. The error signal represents a difference between the current setpoint and the load current Iz or between the voltage setpoint and the load voltage Vz, whichever is to be regulated.

Referring to the above, the load Z may be a battery that is charged by the power supply system 1. According to one example, charging the battery may include a first charging phase in which the power supply system 1 regulates the load current Iz that charges the battery, and a second charging phase in which the power supply system 1 regulates the load voltage Vz. According to one example, the power supply system 1 changes from the first charging phase to the second charging phase after the load voltage Vz has reached a predefined voltage threshold.

A load input power Pz is the power received by the load Z and is given by the load voltage Vz multiplied with the load current Iz. The load input power Pz is also given by the output power Ps of the power supply system 1 minus power losses occurring in the switched-mode power converter 2. It can be assumed, that the power losses occurring in the switched-mode power converter are low as compared to the output power Ps, so that the load input power Pz at least approximately equals the output power Ps, $Pz \approx Ps$.

In the following, Rdc denotes the input impedance of the power converter 2. Changing the input impedance Rdc by the switched-mode power converter 2 includes changing the supply voltage Vs and the supply current Is dependent on the load impedance Rz. The switched-mode power converter 2, for example, increases the supply voltage Vs and decreases the supply current Is when the impedance Rs is to be increased, and decreases the supply voltage Vs and increases the supply current Is when the impedance Rs is to be decreased. Such changes of the supply voltage Vs and the supply current Is do not change the output power Ps, which is defined by the power supply system 1.

One example of the switched-mode power converter 2 is illustrated in Figure 3 in greater detail. The switched-mode power converter 2 according to Figure 3 includes a converter circuit (which is also referred to as converter circuit) 25, and a controller 26. The converter circuit 25 is connected between the input 21, 22 and the output 23, 24 of the power converter 2, and the controller 26 is configured to control operation of the converter circuit 25. More specifically, the controller 26 is configured to adjust the duty cycle of a switched-mode operation of the converter circuit 25 and, therefore, the duty cycle of the switched-mode operation of the switched-mode power converter 2.

According to the example illustrated in Figure 3, the controller 26 is configured to receive a measured load voltage Vz' and a measured load current Iz' and is configured to calculate the input impedance Rz of the load Z dependent on the measured load voltage Vz' and the measured load current Iz' in accordance with equation (1). The measured load voltage Vz' represents the load voltage Vz and may be obtained by measuring the load voltage Vz in a conventional way using any kind of conventional voltage measurement circuit. The measured load current Iz' represents the load current Iz and may be obtained by measuring the load current Iz in a conventional way using any kind of conventional current measurement circuit. Furthermore, the controller 26 is configured to generate a pulse-with modulated (PWM) control signal Spwm dependent on the input impedance Rz. The PWM control signal Spwm is received by the converter circuit 25 and adjusts the duty cycle of the switched-mode operation converter circuit 25 and, therefore, the duty cycle of the switched-mode operation of the switched-mode power converter 2.

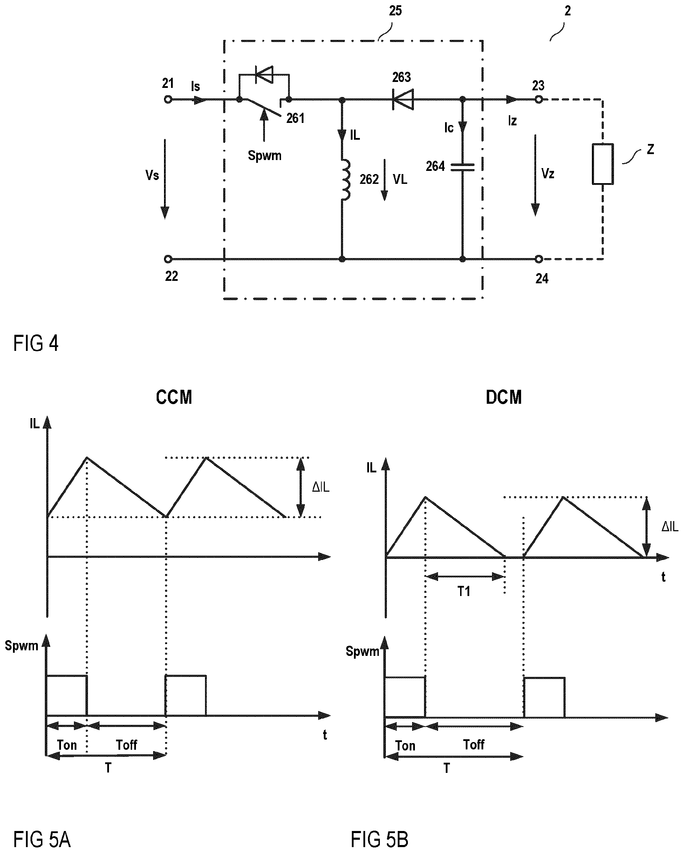

Various kinds of switched-mode power converters may be used to implement the switched-mode power converter 2 in the electronic system. According to one example, the switched-mode power converter 2 is a buck-boost converter. The converter circuit 25 of a buck-boost converter is illustrated in Figure 4.

Referring to Figure 4, the converter circuit 25 of the buck-boost converter includes a first series circuit including an electronic switch 261 and an inductor 262, wherein the first series circuit is connected between a first input node 21 and a second input node 22 of the input 21, 22. A second series circuit including a rectifier element 263 and an output capacitor 264 is connected in parallel with the inductor 262. An output voltage of the converter circuit 25, which equals the load voltage Vz, is available across the output capacitor 264. The electronic switch 261 is driven by the PWM control signal Spwm, so that the electronic switch 261 switches on or off dependent on the PWM control signal Spwm. The rectifier element 263 is a diode, for example.

The converter circuit 25 according to Figure 4 can be operated in a continuous conduction mode (CCM) or a discontinuous conduction mode (DCM). Operating the converter circuit 25 in CCM is explained with reference to Figure 5A in the following, and operating the converter circuit 25 in DCM is explained with reference to Figure 5B in the following.

Each of Figures 5A and 5B shows signal diagrams of an inductor current IL through the inductor 262 and of the control signal Spwm in successive drive cycles of the electronic switch 261. Each of these drive cycles includes a duration T, which is referred to as cycle duration in the following, an on-time with an on-time duration Ton, and an off-time with an off-time duration Toff. The cycle duration T of the drive cycle is given by the on-time duration Ton plus the off-time duration Toff,

$$T = Ton + Toff \qquad\qquad (2)$$

During the on-time, the control signal Spwm switches on the electronic switch 261, and, during the off-time, the control signal Spwm switches off the electronic switch 261. The control signal Spwm either has an on-level, which switches on the electronic switch 261, or an off-level, which switches off the electronic switch 261. Just for the purpose of illustration, the on-level is a high signal level and the off-level is a low signal level in the signal diagrams illustrated in Figures 5A and 5B.

As can be seen from Figures 5A and 5B, the inductor current IL increases during the on-time and decreases during the off-time. In each of CCM and DCM, the duty cycle D of the switched-mode operation of the converter circuit 25 is given by the on-time duration Ton divided by the drive cycle duration T,

$$D = \frac{Ton}{T} \tag{3}.$$

Operating a power converter 2 with a buck-boost converter circuit 25 of the type illustrated in Figure 4 is briefly explained in the following with reference to some equations that illustrate operation of the converter circuit 25 during the on-time and the off-time of one drive cycle. It should be noted that the following explanation is based on the assumption that the converter circuit 25 is in a steady-state, which includes that the duty cycle D is essentially constant for several successive drive cycles. Furthermore, it is assumed that a voltage across the electronic switch 261 is essentially zero when the electronic switch 261 is switched on.

During the on-time, the inductor current IL essentially equals the supply current Is received at the input 21, 22 of the switched-mode power converter,

$$Is = IL \tag{4-1},$$

and an inductor voltage VL, which is the voltage across the inductor 262, essentially equals the supply voltage Vs,

$$VL = Vs \tag{4-2}.$$

Thus, a slope $\frac{dIL}{dt}$ of the inductor current IL is essentially given by

$$\frac{dIL}{dt} = \frac{Vs}{L} \tag{4-3},$$

where L is the inductance of inductor 262.

Furthermore, during the on-time the load current Iz is provided by the output capacitor 264, wherein

$$Iz = -Ic = \frac{Vz}{Rz} \tag{4-4},$$

where Ic denotes the current into the output capacitor 264 and Rz denotes the load impedance.

During the off-time, the inductor voltage VL essentially equals the load voltage Vz (under the assumption that a voltage drop across the rectifier element is 263 can be neglected),

$$VL = Vz \tag{4-5},$$

and the capacitor current Ic is given by

$$Ic = -IL - Iz = -IL - \frac{Vz}{Rz} \tag{4-6}.$$

In the steady-state of the converter circuit 25, an average $\overline{VL}$ of the inductor voltage VL over one drive cycle is zero, that is,

$$\overline{VL} = \int_T VL(t)dt = \frac{Vs \cdot Ton + Vz \cdot Toff}{T} = \frac{Vs \cdot D \cdot T + Vz \cdot (1-D) \cdot T}{T} = 0 \qquad (4\text{-}7),$$

where the average voltage during the on-time is given by the supply voltage Vs and the average voltage during the off-time is given by the load voltage Vz. Based on equation (4-7) it can be shown that, in the steady state, the load voltage Vz can be adjusted dependent on the supply voltage by suitably adjusting the duty cycle D,

$$Vz = -\frac{D}{D-1} \cdot Vs \qquad (4\text{-}8).$$

Based on equation (4-8) it can be seen that the converter circuit 25 according to Figure 4 is an inverting converter circuit, so that a polarity of the load voltage Vz is opposite the polarity of the supply voltage Vs. Furthermore, the converter circuit 25 operates in a buck mode, in which a magnitude of the load voltage Vz is lower than the magnitude of the supply voltage Vs, when the duty cycle D is below 0.5 and operates in a boost mode, in which the magnitude of the load voltage Vz is higher than the magnitude of the supply voltage Vs, when the duty cycle D is higher than 0.5.

In the steady-state, an average $\overline{Ic}$ of the capacitor current Ic over one drive cycle is zero, that is,

$$\overline{Ic} = \int_T Ic(t)dt = \frac{-\frac{Vz}{Rz} \cdot Ton + \left(-\frac{Vz}{Rz} - IL\right) \cdot Toff}{T} = \frac{-\frac{Vz}{Rz} \cdot D \cdot T + \left(-\frac{Vz}{Rz} - IL\right) \cdot (1-D) \cdot T}{T} = 0 \quad (4\text{-}9).$$

Based on equations (4-9) and (4-8) it can be shown that an average $\overline{IL}$ of the inductor current IL is given by

$$\overline{IL} = -\frac{Vz}{Rz \cdot (1-D)} = \frac{Vs \cdot D}{Rz \cdot (1-D)^2} \qquad (4\text{-}10).$$

In both DCM and CCM, a peak-to-peak current ∆IL is dependent on the on-time duration Ton, the supply voltage Vs, and the inductance as follows,

$$\Delta IL = \frac{Vs}{L} \cdot Ton = \frac{Vs}{L} \cdot D \cdot T \qquad (4\text{-}11).$$

At a boundary between CCM and DCM, the average inductor current $\overline{IL}$ equals half the peak to peak-to-peak current ∆IL,

$$\overline{IL} = \frac{Vs \cdot D}{Rz \cdot (1-D)^2} = \frac{Vs}{2 \cdot L} \cdot D \cdot T \qquad (4\text{-}12).$$

In CCM, the average inductor current is higher than half the peak-to-peak current ∆IL, so that based on equation (4-12) it can be shown that the converter circuit 25 operates in CCM whenever

$$L > \frac{Rz(1-D)^2}{2} \cdot T \qquad (4\text{-}13),$$

and operates in DCM whenever

$$L < \frac{Rz(1-D)^2}{2} \cdot T \qquad (4\text{-}14).$$

According to one example, the cycle duration T is fixed and is given by the reciprocal of a switching frequency fsw of the electronic switch 261, T=1/fsw. Using the switching frequency fsw instead of the cycle duration T, the conditions according to equations (4-13) and (4-14) for operating the converter circuit in either CCM or DCM can be expressed as

$$L > \frac{Rz(1-D)^2}{2 \cdot fsw} \quad \text{(CCM)} \qquad (4\text{-}15),$$

$$L < \frac{Rz(1-D)^2}{2 \cdot fsw} \quad \text{(DCM)} \qquad (4\text{-}16).$$

Thus, at a given inductance L, a given switching frequency fsw, and a given load impedance Rz the converter circuit 25 operates in CCM whenever

$$D > 1 - \sqrt{\frac{2 \cdot fsw \cdot L}{Rz}} \qquad (4\text{-}17),$$

and operates in DCM whenever

$$D < 1 - \sqrt{\frac{2 \cdot fsw \cdot L}{Rz}} \qquad (4\text{-}18).$$

The switching frequency fsw is selected from between several 10 kHz and 500 kHz, for example.

Referring to the above, the buck-boost converter circuit 25 has an input impedance Rdc, which is given by the supply voltage Vs received from the power supply 1 divided by the supply current Is received from the power supply 1,

$$Rdc = \frac{Vs}{Is} \qquad (5).$$

Referring to the above, the input impedance Rdc of the converter circuit 25 is dependent on the duty cycle D. More specifically, based on equations (4-1) to (4-18) it can be shown that, in CCM, the input impedance Rdc is given by

$$Rdc = \left(\frac{1-D}{D}\right)^2 \cdot Rz \qquad (6a),$$

and in DCM, the input impedance Rdc is given by

$$Rdc = \frac{2 \cdot L \cdot fsw}{D^2} \qquad (6b),$$

where Rz denotes the load impedance, L denotes the inductance of the inductor 262, and fsw denotes the switching frequency. Thus, by suitably adjusting the duty cycle D in either CCM or DCM the input impedance Rdc of the converter circuit 25 can be adjusted.

In the following, Rdco denotes a desired or optimum input impedance. Based on equation (6a) it can be shown that in CCM the desired input impedance Rdco can be achieved by adjusting the duty cycle D dependent on the load impedance Rz and the desired input impedance Rdco as follows:

$$D = \frac{1}{1 + \sqrt{\frac{Rdco}{Rz}}} \qquad (7a).$$

Equivalently, based on equation (6b) it can be shown that in DCM the desired input impedance Rdco can be achieved by adjusting the duty cycle D dependent on the inductance L, the switching frequency fsw, and the desired input impedance Rdco as follows:

$$D = \sqrt{\frac{2 \cdot L \cdot fsw}{Rdco}} \qquad (7b)$$

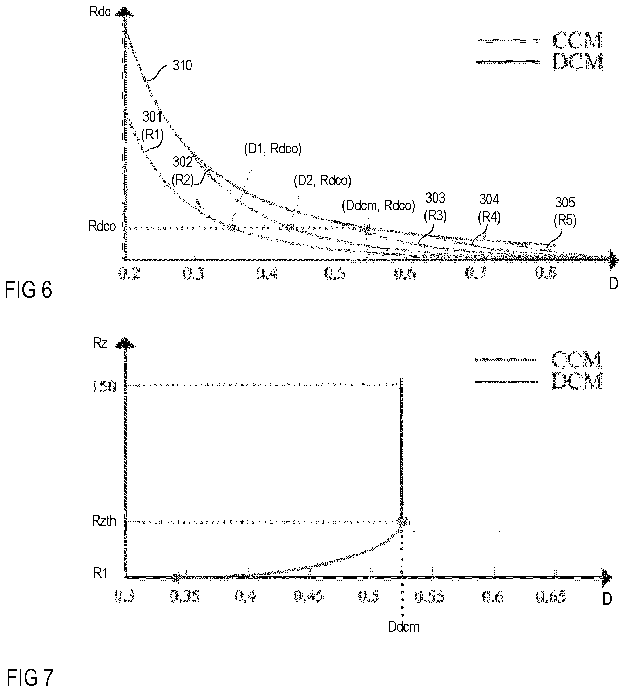

Figure 6 illustrates the input impedance Rdc of the power converter 2 according to Figure 4 dependent on the duty cycle of the converter circuit 25. In Figure 6, curves 301 - 305 illustrate the input impedance Rdc dependent on the duty cycle D in CCM at different load impedances Rz=R1, Rz=R2, Rz=R3, Rz=R4, Rz=R5, wherein R1 < R2 < R3 < R4 < R5. Curve 310 illustrates the input impedance Rdc dependent on the duty cycle D in DCM. As can be seen from equation (6b), the input impedance Rdc is independent on the load impedance in DCM.

Based on curve 301 in Figure 6 it can be seen that, at the load impedance Rz=R1, the desired input impedance Rdco can be achieved when operating the converter circuit 25 at duty cycle D=D1. Based on curve 302 it can be seen that, at the load impedance Rz=R2, the desired input impedance Rdco can be achieved when operating the converter circuit 25 at duty cycle D=D2. In the example illustrated in Figure 6, the converter circuit 25 operates in CCM when operated at the duty cycles D=D1 and D=D2. When the power converter 2 operates in CCM and the load impedance Rz increases, the duty cycle is to be increased in order to achieve the desired input impedance Rdco.

Referring to Figure 6, the power converter 2 changes from CCM to DCM when the duty cycle D reaches a duty cycle threshold Ddcm. This duty cycle threshold Ddcm is dependent on the switching frequency fsw, the inductance L, and the desired input impedance Rdco in accordance with equation (7b). When operated with a duty cycle D given by the duty cycle threshold Ddcm, D=Ddcm, the power converter operates in DCM. In this operating mode, referring to equation (6b) the input impedance is independent of the load impedance Rz. Thus, referring to equation (7b), the duty cycle D can be adjusted dependent on the desired input impedance Rdco but independent of the load impedance Rz in order to achieve the desired input impedance Rdco.

Based on curves of the type illustrated in Figure 6, that is, based on equations (7a) and (7b), for each load impedance Rz, a duty cycle D that is associated with the desired input impedance Rdco can be obtained. A "duty cycle that is associated with the desired input impedance Rdco" is the duty cycle that operates the power converter 2 in such a way that the input impedance of the power converter 2 equals the desired input impedance Rdco.

Figure 7 illustrates the duty cycle D dependent on the load impedance Rz that operates the power converter 2 in such a way that the input impedance Rdc equals the desired input impedance Rdco. The curve illustrated in Figure 7 has been obtained based on equations (7a) and 7(b). As outlined above, the power converter 2 operates in DCM when the duty cycle D reaches the duty cycle threshold Ddcm. Referring to equations (6b) and (7b), in DCM, the input impedance Rdc is dependent on the duty cycle and independent of the load impedance Rz. Thus, in DCM, the duty cycle is at least approximately constant and equals the duty cycle threshold Ddcm in order to achieve the desired input impedance Rdco.

Referring to Figure 7, the duty cycle threshold Ddcm is associated with a load impedance threshold Rzth, which is the load impedance at which the power converter 2 enters DCM, wherein the power converter remains to be operated in DCM as the load impedance Rz further increases.

The controller 26 according to Figure 3 is configured to adjust the duty cycle of the PWM control signal Spwm in accordance with the curve illustrated in Figure 7 in order to achieve the desired input impedance Rdco of the power converter 2. For this, the controller 26 may include a lookup table in which values of the load impedance Rz and associated duty cycles D are stored. In this example, the controller 26 calculates the load impedance Rz based on the measured load voltage Vz' and the measured load current Iz', looks up the associated duty cycle in the lookup table, and adjusts the duty cycle of the PWM to be in accordance with the duty cycle retrieved from the lookup table.

According to another example, the controller 26 is configured to calculate the load impedance Rz based on the measured load voltage Vz' and the measured load current Iz' and calculates the duty cycle in accordance with equations (7a) and (7b). According to one example, the controller 26 is configured to base the decision whether to calculate the duty cycle in accordance with equation (7a) or in accordance with equation (7b) based on the calculated load impedance Rz. Referring to the above, the duty cycle threshold Ddcm is associated with a load impedance threshold Rzth. According to one example, the controller 26 is configured to (a) calculate the duty cycle in accordance with equation (7a) when the calculated load impedance Rz is lower than the load impedance threshold Rzth, that is, when Rz < Rzth; and (b) and calculate the duty cycle in accordance with equation (7b) when the calculated load impedance Rz is higher than the load impedance threshold Rzth, that is, when Rz > Rzth.

It should be noted that the way in which the input impedance Rdc is dependent on the duty-cycle D depends on the specific type of converter circuit. Equations (7a) and (7b) illustrate the dependency of the duty cycle D on the desired input impedance Rdco in the converter circuit 25 with the buck-boost topology according to Figure 4.

Implementing the converter circuit 25 with a buck-boost topology, however, is only an example. The method of adjusting the input impedance Rdc of the converter circuit 25 dependent on the load impedance Rz in order to achieve a desired input impedance Rdco is not restricted to using a converter circuit 25 with a buck-boost topology. Instead, any other type of switched-mode converter circuit can be used as well.

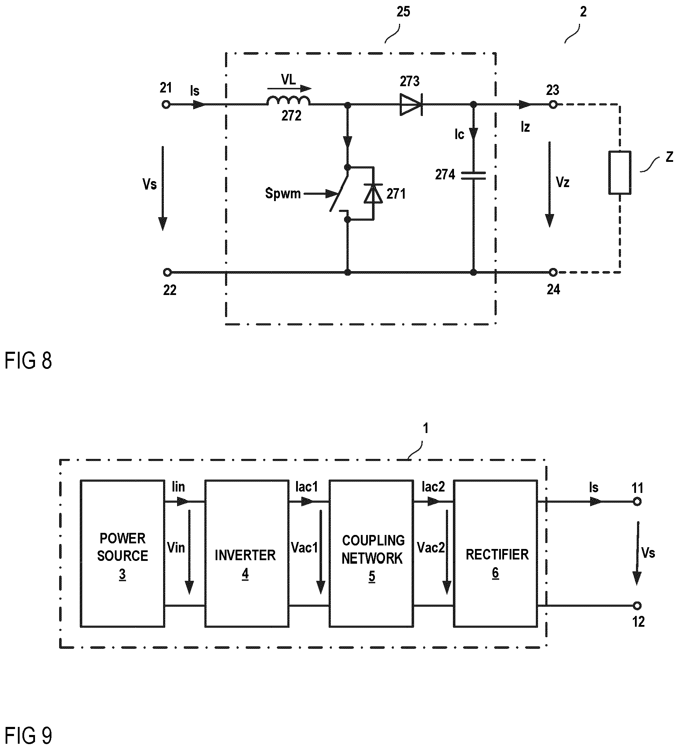

For the purpose of illustration Figure 8 illustrates one example of a converter circuit 25 that has a boost topology. The converter circuit 25 according to Figure 8 includes a series circuit with an inductor 272 and an electronic switch 271 connected between the input nodes 21, 22 of the converter circuit 25, wherein the inductor 272 is connected between the first input node 21 and the electronic switch 271 and the electronic switch 271 is connected between the inductor 272 and the second input node 22. A series circuit including a rectifier element 273 and an output capacitor 274 is connected in parallel with the electronic switch 271. The output capacitor 274 is connected between the output nodes 23, 24 of the converter circuit 25. The rectifier element 273 is a diode, for example. Referring to Figure 8, the electronic switch 271 of the converter circuit 25 is controlled by the PWM drive signal Spwm generated by the controller 26 (not illustrated in Figure 8).

Operating a power converter 2 with a boost converter circuit 25 of the type illustrated in Figure 4 is briefly explained in the following with reference to some equations that illustrate operation of the converter circuit 25 during the on-time and the off-time of one drive cycle. It should be noted that the following explanation is based on the assumption that the converter circuit 25 is in a steady-state, which includes that the duty cycle D is essentially constant for several successive drive cycles. Furthermore, it is assumed that a voltage across the electronic switch 271 is essentially zero when the electronic switch 271 is switched on.

The converter circuit 25 with the boost topology can be operated in CCM and DCM. The timing diagrams illustrated in Figures 5A and 5B that illustrate the inductor current IL and the PWM drive signal Spwm apply to the converter circuit 25 according to Figure 8 accordingly.

During the on-time, the inductor current IL essentially equals the supply current Is received at the input 21, 22 of the switched-mode power converter,

$$Is = IL \qquad (8\text{-}1),$$

the inductor voltage VL, which is the voltage across the inductor 272, essentially equals the supply voltage Vs,

$$VL = Vs \qquad (8\text{-}2).$$

Thus, a slope $\frac{diL}{dt}$ of the inductor current IL is essentially given by the supply voltage Vs,

$$\frac{dIL}{dt} = \frac{Vs}{L} \qquad (8\text{-}3),$$

where L is the inductance of inductor 272.

Furthermore, during the on-time the load current Iz is provided by the output capacitor 274, wherein

$$Iz = -Ic = \frac{Vz}{Rz} \qquad (8\text{-}4),$$

where Ic denotes the current into the output capacitor 274 and Rz denotes the load impedance.

During the off-time, the inductor voltage VL essentially equals the supply voltage Vs minus the load voltage Vz (under the assumption that a voltage drop across the rectifier element 273 can be neglected),

$$VL = Vs - Vz \qquad (8\text{-}5),$$

and the capacitor current Ic is given by

$$Ic = IL - Iz = IL - \frac{Vz}{Rz} \qquad (8\text{-}6).$$

In the steady-state of the converter circuit 25, an average $\overline{VL}$ of the inductor voltage VL over one drive cycle is zero, that is,

$$\overline{VL} = \int_T VL(t)dt = \frac{Vs \cdot Ton + (Vs - Vz) \cdot Toff}{T} = \frac{Vs \cdot D \cdot T + (Vs - Vz) \cdot (1-D) \cdot T}{T} = 0 \qquad (8\text{-}7),$$

where the average voltage during the on-time is given by the supply voltage Vs and the average voltage during the off-time is given by the supply voltage minus the load voltage, Vs-Vz. Based on equation (4 it'8-7) it can be shown that, in the steady state, the load voltage Vz can be adjusted dependent on the supply voltage Vs by suitably adjusting the duty cycle D,

$$Vz = \frac{1}{1-D} \cdot Vs \qquad (8\text{-}8).$$

Different from the converter circuit 25 with the buck-boost topology according to Figure 4, the converter circuit 25 with the boost topology according to Figure 8 is a noninverting topology, so that the load voltage Vz and the supply voltage Vs have the same polarity.

In the steady-state, an average $\overline{Ic}$ of the capacitor current Ic over one drive cycle is zero, that is,

$$\overline{Ic} = \int_T Ic(t)dt = \frac{-\frac{Vz}{Rz} \cdot Ton + \left(-\frac{Vz}{Rz} + IL\right) \cdot Toff}{T} = \frac{-\frac{Vz}{Rz} \cdot D \cdot T + \left(-\frac{Vz}{Rz} + IL\right) \cdot (1-D) \cdot T}{T} = 0 \qquad (8\text{-}9).$$

Based on equations (8-9) and (8-8) it can be shown that an average $\overline{IL}$ of the inductor current IL is given by

$$\overline{IL} = \frac{Vz}{Rz \cdot (1-D)} = -\frac{Vs}{Rz \cdot (1-D)^2} \qquad (8\text{-}10).$$

In both DCM and CCM, a peak-to-peak current ΔIL is dependent on the on-time duration Ton, the supply voltage Vs, and the inductance as follows,

$$\Delta IL = \frac{Vs}{L} \cdot Ton = \frac{Vs}{L} \cdot D \cdot T \qquad (8\text{-}11).$$

At a boundary between CCM and DCM, the average inductor current $\overline{IL}$ equals half the peak to peak-to-peak current ΔIL,

$$\overline{IL} = \frac{Vs}{Rz \cdot (1-D)^2} = \frac{Vs}{2 \cdot L} \cdot D \cdot T \qquad (8\text{-}12).$$

In CCM, the average inductor current is higher than half the peak-to-peak current ΔIL, so that based on equation (4-12) it can be shown that the converter circuit 25 operates in CCM whenever

$$L > \frac{Rz \cdot D \cdot (1-D)^2 \cdot T}{2} \qquad (8\text{-}13),$$

and operates in DCM whenever

$$L < \frac{Rz \cdot D \cdot (1-D)^2 \cdot T}{2} \qquad (8\text{-}14).$$

According to one example, the cycle duration T is fixed and is given by the reciprocal of the switching frequency fsw of the electronic switch 261, T=1/fsw. Using the switching frequency fsw instead of the cycle duration T, the conditions according to equations (4-13) and (4-14) for operating the converter circuit in either CCM or DCM can be expressed as

$$L > \frac{Rz \cdot D \cdot (1-D)^2}{2 \cdot fsw} \qquad (CCM) \qquad (8\text{-}15),$$

$$L < \frac{Rz \cdot D \cdot (1-D)^2}{2 \cdot fsw} \qquad (DCM) \qquad (8\text{-}16).$$

Furthermore, it can be shown that input impedance Rdc of the converter circuit 25 with the boost-topology according to Figure 8, in CCM, is given by

$$Rdc = (1-D)^2 \cdot Rz \qquad (9a)$$

and, in DCM, is given by

$$Rdc = \left(\frac{D1}{D+D1}\right)^2 \cdot Rz \qquad (9b),$$

where

$$D1 = \frac{T1}{T} \qquad (10).$$

Referring to Figure 5B, T1 is the time period, in DCM, in which the inductor current decreases. T1 is shorter than the off-period duration Toff, T1 < Toff. At the boundary between CCM and DCM, T1 equals the off-time duration Toff, so that Rdc when calculated in accordance with equation (9a) equals Rdc when calculated in accordance with equation (9b), that is $\left(\frac{D1}{D+D1}\right)^2 \cdot Rz = (1-D)^2 \cdot Rz$ .

It can be shown that D1 is dependent on the inductance L of the inductor 272, the duty cycle D, the load impedance Rz, and the switching frequency fsw as follows,

$$D1 = \frac{L \cdot fsw + \sqrt{(L \cdot fsw)^2 + 2 \cdot D^2 \cdot Rz \cdot L \cdot fsw}}{D \cdot Rz} \qquad (11).$$

In the same way as explained with regard to the converter circuit 25 with the buck-boost topology according to Figure 4, at a given inductance L, a given switching frequency fsw and a determined load impedance Rz, the duty cycle D can be determined that operates the converter circuit 25 with the boost topology at a desired input impedance Rdco. According to one example, for each load impedance Rz the duty cycle D associated with the desired input impedance Rdco is calculated and stored in a lookup table. In this example, the controller 26, during operation of the power converter 2, is configured to determine the load impedance Rz based on the measured load voltage Vz' and the measured load current Iz' and to adjust the duty cycle D based on the determined load impedance and the associated duty cycle stored in the lookup table.

Referring to the above, the power supply system 1 provides an output power Ps which is transmitted by the power converter 2 to the load. Figure 9 illustrates one example of the power supply system 1 in greater detail.

The power supply system according to this example includes a power source 3, an inverter 4, a wireless coupling network (or transmitter) 5, and a rectifier 6. An output of the rectifier 6 is connected to the output nodes 23, 24 of the power supply system 1, so that the supply voltage Vs and the supply current Is are available at the output of the rectifier 6.

According to one example, the power source 3 is a DC (direct current) power source configured to provide a direct voltage Vin and a direct current Iin. The voltage Vin and the current Iin provided by the power source 3 are received by the inverter 4 and are referred to as input voltage Vin and input current Iin in the following. Any kind of DC power source 1 may be used to provide the input current Iin and the input voltage Vin. According to one example, the DC power source 3 is a battery. According to another example, the DC power source 3 is a system with an AC (alternating current) power source, such as a power grid, and an AC-DC power converter connected to the AC power source and configured to generate DC power based on AC power provided by the AC power source.

The power supply system according to Figure 9 may also be referred to as wireless power supply system or wireless power transfer system and is configured to transmit DC power provided by the power source 3 to the output 23, 24 of the power supply system in a wireless fashion. For this, the inverter 4 is configured to convert the DC power provided by the power source 3 into AC power configured to be transmitted via the coupling network 5, and the rectifier 6 is configured to convert the AC power received from the coupling network 5 into DC power provided at the output 11, 12 of the power supply system 1.

More specifically, the inverter 4 is configured to generate a first alternating voltage Vac1 and a first alternating current Iac1 based on the DC power received from the power source 3. The power associated with the first alternating voltage Vac1 and the first alternating current Iac1 is referred to as first AC power in the following. The coupling network 5 is configured to receive the first alternating power (the first alternating voltage Vac1 and the first alternating current Iac1) and is configured to provide a second alternating voltage Vac2 and a second alternating current Iac2 based on the first alternating power Pac1. A power associated with the second alternating voltage Vac2 and the second alternating current Iac2 is referred to as second AC power in the following. The rectifier 6 is configured to receive the second AC power Pac2 and is configured to provide the supply voltage Vs and the supply current Is based on the second AC power.

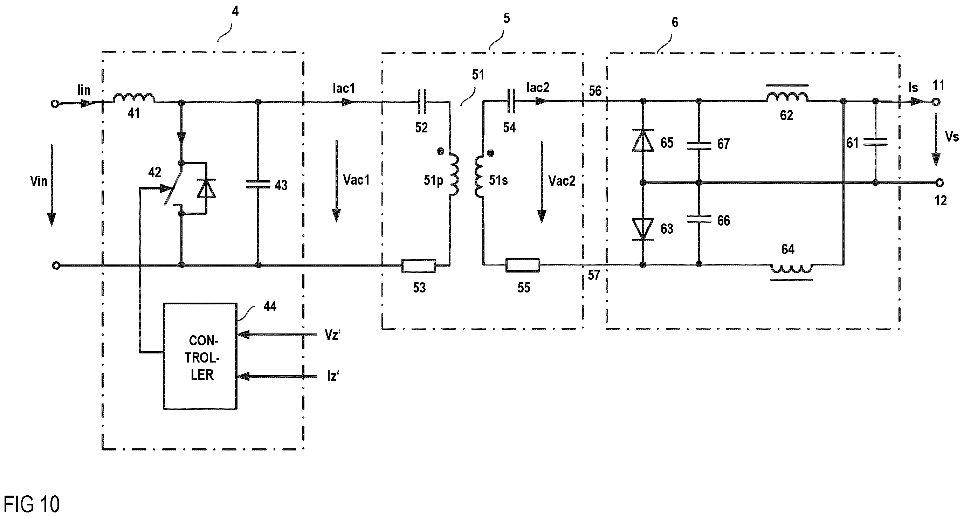

Examples of the inverter 4, the coupling network 5, and the rectifier 6 are illustrated in Figure 10. Referring to Figure 10, the inverter 4 may include a series circuit including an inductor 41 and an electronic switch 42, wherein the series circuit receives the input voltage Vin from the power source (not illustrated in Figure 10). A capacitor 43 is connected in parallel with the electronic switch 42. The first alternating voltage Vac1 is the voltage across the parallel circuit including the electronic switch 42 and the capacitor 43. The inductor 41 and the capacitor 43 form an LC circuit that is excited by a switched-mode operation of the electronic switch 42, so that the first alternating voltage Vac1 and the first alternating current Iac1 are available at the output of the inverter 4.

Referred to Figure 10, the inverter 4 includes a controller 44 that is configured to operate the electronic switch 42 in a PWM fashion. Operating the electronic switch 42 in the PWM fashion excites the LC circuit and generates the first alternating voltage Vac1 and the first alternating current Iac1 from the DC input voltage Vin and the DC input current Iin. The receiver network that is configured to receive the power transmitted by the resonant transmitter network. A resonant frequency of the resonant transmitter network and the resonant receiver network can be adjusted by suitably adjusting the inductances of the primary winding 51p and the secondary winding 51s and the capacitances of the first and second capacitors 52, 54.

Referring to Figure 10, the rectifier 6 may include an output capacitor 61 connected between the output nodes 11, 12 of the power supply system. A first inductor 62 may be connected between a first output node 56 of the coupling network 5 and the first output node 11 of the power supply system, and a first rectifier element 63 may be connected between the second output node 12 of the power supply system 1 and a second output node 57 of the coupling network 5. A second inductor 64 may be connected between the second output node 57 of the coupling network 5 and the first output node 11 of the power supply system, and a second rectifier element 65 may be connected between the second output node 12 of the power supply system 1 and the first output node 56 of the coupling network 5. Each of the first and second rectifier element 63, 65 may be implemented as a diode. According to one example, polarities of these diodes 63, 65 are such that the supply current Is flows through the first inductor 63 and the first rectifier element 63 whenever the second alternating voltage Vac2 has a first polarity and flows through the second inductor 64 and the second diode 65 whenever the second alternating voltage Vac2 has a second polarity opposite the first polarity.

Optionally, the rectifier 6 further includes a first capacitor 66 connected in parallel with the first rectifier element 63, and a second capacitor 67 connected in parallel with the second rectifier element 65.

The rectifier 6 according to Figure 10 is a passive rectifier. This, however, is only an example. According to another example (not illustrated) the rectifier is an active rectifier that includes active rectifier elements instead of the passive rectifier element 63, 65 illustrated in Figure 10.

Referring to the above, the power supply system 1 may be sensitive to load changes. More specifically, the inverter 4 may be sensitive to load changes. In the electronic system explained hereinabove, the input impedance of the power converter 2 that is seen by the power supply system 1 is adjusted dependent on the load impedance Rz so that, at least over a certain range of the input impedance Rz of the load Z, the power supply system 1 and, in particular, the inverter 4 can be operated at a high efficiency.

Some of the aspects explained above are briefly summarized in the following with reference to numbered examples.

Example 1. A method, including: adjusting an input impedance of a switched-mode power converter connected between a power supply system and a load dependent on an input impedance of the load, wherein adjusting the input impedance of the switched-mode power converter includes adjusting a duty cycle of the switched-mode power converter.

Example 2. The method of example 1, wherein the switched-mode power converter includes: a converter circuit including an electronic switch; and a controller, and wherein adjusting the input impedance of the switched-mode power converter includes adjusting a duty cycle of a switched-mode operation of the electronic switch dependent on the input impedance of the load determined by the controller.

Example 3. The method of any one of examples 1 to 2, wherein the converter circuit includes a buck-boost topology.

Example 4. The method of any one of examples 1 to 2, wherein the converter circuit includes a boost topology.

Example 5. The method of any one of examples 1 to 4, wherein the power supply system includes a coupling network with a transformer, wherein the transformer includes a first winding and a second winding that are inductively coupled through an air gap.

Example 6. The method of example 5, wherein the power supply system further includes: an inverter configured to provide a first alternating current and a first alternating voltage to the coupling network based on power received from a power source; a rectifier configured to receive a second alternating current and a second alternating voltage from the coupling network and connected to the switched-mode power converter.

Example 7. The method of example 6, wherein the inverter is a single-ended class E inverter.

Example 8. An electronic system, including: a controller configured to determine an input impedance of a load connected downstream a switched-mode power converter, and to adjust an input impedance of the switched-mode power converter dependent on the determined input impedance of the load, wherein, to adjust the input impedance of the switched-mode power converter, the controller is configured to adjust a duty cycle of a switched-mode operation of the power converter.

Example 9. The electronic system according to example 8, wherein the electronic system further includes the switched-mode power converter, wherein the switched-mode power converter includes a converter circuit including an electronic switch, and wherein the electronic switch is configured to be operated by the controller based on a PWM signal having the duty cycle.

Example 10. The electronic system according to any one of examples 8 to 9, wherein the converter circuit includes a buck-boost topology.

Example 11. The electronic system according to any one of examples 8 to 9, wherein the converter circuit includes a boost topology.

Example 12. The electronic system according to any one of examples 8 to 11, further including a power supply system with a power source and a coupling network, wherein the coupling network includes a transformer with a first winding and a second winding that are inductively coupled through an air gap.

Example 13. The electronic system according to example 12, wherein the power supply system further includes: an inverter configured to provide a first alternating current and a first alternating voltage to the coupling network based on power received from a power source; a rectifier configured to receive a second alternating current and a second alternating voltage from the coupling network and connected to the switched-mode power converter.

Example 14. The electronic system according to example 13, wherein the inverter is a single-ended class E inverter.

**Claims**

1. A method, comprising:

   adjusting an input impedance ($R_{dc}$) of a switched-mode power converter (5) connected between a power supply system (1) and a load (Z) dependent on an input impedance ($R_z$) of the load (Z), wherein adjusting the input impedance ($R_{dc}$) of the switched-mode power converter (2) comprises adjusting a duty cycle (D) of the switched-mode power converter (5).

2. The method of claim 1, wherein the switched-mode power converter (2) comprises:

   a converter circuit (25) comprising an electronic switch (261; 272); and
   a controller (26), and

wherein adjusting the input impedance (Rdc) of the switched-mode power converter (2) comprises adjusting a duty cycle (D) of a switched-mode operation of the electronic switch (261; 272) dependent on the input impedance (Rz) of the load determined by the controller (26).

3. The method of any one of claims 1 to 2,
   wherein the converter circuit (25) comprises a buck-boost topology.

4. The method of any one of claims 1 to 2,
   wherein the converter circuit (25) comprises a boost topology.

5. The method of any one of claims 1 to 4,

   wherein the power supply system (1) comprises a coupling network (5) with a transformer (51),
   wherein the transformer (5) includes a first winding (51p) and a second winding (51s) that are inductively coupled through an air gap.

6. The method of claim 5,
   wherein the power supply system further comprises:

   an inverter (4) configured to provide a first alternating current (Iac1) and a first alternating voltage (Vac1) to the coupling network (5) based on power received from a power source (3);
   a rectifier (6) configured to receive a second alternating current (Iac2) and a second alternating voltage (Vac2) from the coupling network (5) and connected to the switched-mode power converter (2).

7. The method of claim 6,
   wherein the inverter (4) is a single-ended class E inverter.

8. An electronic system, comprising:

   a controller (26) configured to determine an input impedance (Rz) of a load (Z) connected downstream a switched-mode power converter (2), and to adjust an input impedance (Rdc) of the switched-mode power converter (2) dependent on the determined input impedance (Rz) of the load (Z),
   wherein, to adjust the input impedance (Rdc) of the switched-mode power converter (2), the controller (26) is configured to adjust a duty cycle (D) of a switched-mode operation of the power converter (2).

9. The electronic system according to claim 8,

   wherein the electronic system further comprises the switched-mode power converter (2),
   wherein the switched-mode power converter (2) comprises a converter circuit (25) comprising an electronic switch (261; 271), and
   wherein the electronic switch (261; 271) is configured to be operated by the controller based on a PWM signal having the duty cycle (D).

10. The electronic system according to any one of claims 8 to 9,
    wherein the converter circuit (25) comprises a buck-boost topology.

11. The electronic system according to any one of claims 8 to 9,
    wherein the converter circuit (25) comprises a boost topology.

12. The electronic system according to any one of claims 8 to 11, further comprising a power supply system (1) with a power source (3) and a coupling network (5),
    wherein the coupling network (5) comprises a transformer (51) with a first winding (51p) and a second winding (51s) that are inductively coupled through an air gap.

13. The electronic system according to claim 12,
    wherein the power supply system further comprises:

    an inverter (4) configured to provide a first alternating current (Iac1) and a first alternating voltage (Vac1) to the coupling network (5) based on power received from a power source (3);
a rectifier (6) configured to receive a second alternating current (Iac2) and a second alternating voltage (Vac2) from the coupling network (5) and connected to the switched-mode power converter (2).

**14.** The electronic system according to claim 13,
wherein the inverter (4) is a single-ended class E inverter.

POWER SUPPLY SYSTEM **1** — 11 — $I_s$ 21 → POWER CONVERTER **2** — 23 — $I_z$ Z1 → LOAD **Z**

$V_s$ — $P_s$ — 12 — 22 — $V_z$ — $P_z$ — 24 — Z2

## FIG 1

ADJUSTING AN INPUT IMPEDANCE OF A SWITCHED-MODE POWER CONVERTER CONNECTED BETWEEN A POWER SUPPLY SYSTEM AND A LOAD DEPENDENT ON AN INPUT IMPEDANCE OF THE LOAD — 200

ADJUSTING A DUTY CYCLE OF THE SWITCHED-MODE POWER CONVERTER — 210

## FIG 2

**2**

21 $I_s$ → CONVERTER CIRCUIT **25** → $I_z$ 23

$V_s$ — 22 — $V_z$ — 24

$S_{pwm}$

CONTROLLER **26** ← $I_z'$ ← $V_z'$

## FIG 3

FIG 4

FIG 5A

FIG 5B

FIG 6

FIG 7

25    2

21    Is    VL    273    23
272    Ic    Iz
Spwm    271    274    Z
Vs    Vz
22    24

FIG 8

1

Iin    Iac1    Iac2    Is    11
POWER
SOURCE    Vin    INVERTER    Vac1    COUPLING
NETWORK    Vac2    RECTIFIER    Vs
3    4    5    6
12

FIG 9

FIG 10

EP 4 366 128 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/277003 A1 (VON NOVAK WILLIAM H [US] ET AL) 4 November 2010 (2010-11-04) * paragraphs [0055] - [0105]; figures 5,6,9a,b * | 1-14 | INV. H02J50/12 |
| X | OTA RYOSUKE ET AL: "Efficiency Maximization of Inductive Power Transfer System by Impedance and Switching Frequency Control in Secondary-side Converter", 2018 INTERNATIONAL POWER ELECTRONICS CONFERENCE (IPEC-NIIGATA 2018 -ECCE ASIA), IEEJ INDUSTRY APPLICATION SOCIETY, 20 May 2018 (2018-05-20), pages 3855-3862, XP033428251, DOI: 10.23919/IPEC.2018.8507405 [retrieved on 2018-10-24] * paragraphs [sectionsI] - [0III]; figure 1 * | 1-14 | |

TECHNICAL FIELDS
SEARCHED     (IPC)

H02J

The present search report has been drawn up for all claims

| Place of search | Date of completion of the search | Examiner |
|---|---|---|
| Munich | 23 March 2023 | Grosse, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 5107

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2023

| Patent document cited in search report | Publication date | Patent family member(s) | Publication date |
|---|---|---|---|
| US 2010277003 A1 | 04-11-2010 | CN 102396132 A | 28-03-2012 |
| | | CN 104901432 A | 09-09-2015 |
| | | EP 2409378 A1 | 25-01-2012 |
| | | EP 2988428 A1 | 24-02-2016 |
| | | ES 2553138 T3 | 04-12-2015 |
| | | ES 2705081 T3 | 21-03-2019 |
| | | HU E042668 T2 | 29-07-2019 |
| | | JP 5612069 B2 | 22-10-2014 |
| | | JP 5728612 B2 | 03-06-2015 |
| | | JP 2012521737 A | 13-09-2012 |
| | | JP 2015019576 A | 29-01-2015 |
| | | KR 20110134912 A | 15-12-2011 |
| | | KR 20160071478 A | 21-06-2016 |
| | | TW 201106572 A | 16-02-2011 |
| | | US 2010277003 A1 | 04-11-2010 |
| | | US 2013113299 A1 | 09-05-2013 |
| | | WO 2010108191 A1 | 23-09-2010 |

EPO FORM P0459

For more details about this annex : see Official Journal of the European Patent Office, No. 12/82